# EUROPEAN PATENT SPECIFICATION

(11) **EP 2 779 531 B1**
(45) Date of publication and mention of the grant of the patent: **08.05.2019**
(21) Application number: 14160106.2
(22) Date of filing: 14.03.2014
(51) Int. Cl.: H04L 12/24, H04L 12/46, H04L 29/06, H04L 12/931, H04L 29/12

(54) **System and method for abstracting network policy from physical interfaces and creating portable network policy**
System und Verfahren zur Abstraktion von Netzwerkpolitik aus physischen Schnittstellen und Erzeugung einer tragbaren Netzwerkpolitik
Système et procédé d'abstraction de politique de réseau à partir d'interfaces physiques et de création de politique de réseau portable

(30) Priority: 14.03.2013 US 201361784371 P; 06.03.2014 US 201414199813
(43) Date of publication of application: 17.09.2014
(73) Proprietor: Arista Networks, Inc., Santa Clara, CA 94085-4040 (US)
(72) Inventor: Gourlay, Douglas, San Franscisco, CA 94104 (US); Pech, Andre Henri Joseph, San Franscisco, CA 94115 (US)
(74) Representative: Barton, Russell Glen

(56) References cited:
- EP-A2- 2 431 883
- US-A1- 2006 274 774
- US-B1- 7 380 025
- US-B1- 7 516 211

## Description

### RELATED APPLICATIONS

Applicant claims the benefit of priority of prior, co-pending provisional application Serial No. 61/784,371, filed March 14, 2013.

### FIELD OF INVENTION

This invention relates generally to data networking and more particularly to determining a network policy for a port of a network element based on a device that is linked to that port.

### BACKGROUND OF THE INVENTION

A network element can use network configurations bound to physical interfaces to implement a policy on how network data is processed through these physical interfaces. For example, an operator can create an access control list (ACL) policy and bind this policy to port labeled as Ethernet5. The operator can manually bind the policy directly to Ethernet5 or can manually assign Ethernet5 to a port group and further bind a policy to the ports in the port group. In this example, the network element applies the ACL policy to the network data communicated through Ethernet5. In either case, the operator is manually binding the policy to the port.

However, the operator's actual intent in many cases is not to protect the port Ethernet5 as much as it is to apply the policy to the device(s) that are connected to Ethernet5. If the device attached to Ethernet5 moves from one port to another, whether on the same or different network element, the policy bound to the port does not follow the device unless the policy is replicated to the new port. The device could move because the device is re-cabled to a new port on the same or different network element or the device could be a virtual machine that migrates to another virtual machine server. For example, the removal of the physical cable from Ethemet5 and plugging it into the port labeled as Ethemet6 would bypass any/all policies bound to Ethemet5 unless the policy is replicated to Ethemet6.

In addition, the operator may bind the policy to the wrong port for the intended device or the operator may correctly bind the policy to the port, but the device is connected to the wrong port. In either case, the policy intended to protect that device is bound to a port that the device is not connected to. In this case, the policy is not being applied to the network data communicated with the device from the network element.

Further background information can be found in EP2431883, which describes a method, a network management center, and a related device.

### SUMMARY OF THE DESCRIPTION

A method and apparatus of a device that determines a network policy for an attached device based on one or more characteristics of the attached device is described. In an exemplary embodiment, a network element detects a device on a port coupled to a link connecting the network element and the device. In response to the detecting of the device on the port, the network element further determines a device configuration signature from the device, where the device configuration signature is based on a configuration of the device. The network element additionally determines a port-based network policy based on the device configuration signature. The network element applies the port-based network policy to the port, wherein the network element applies the port-based network policy to process network data communicated through the port.

Other methods and apparatuses are also described. An object of the invention is a method as claimed in claim 1. Another object of the invention is a medium as claimed in claim 11. A further object of the invention is a network element as claimed in claim 12. Another object of the invention is a system as claimed in claim 13. Preferred embodiments are covered by the appended dependent claims.

### BRIEF DESCRIPTION OF THE DRAWINGS

The present invention is illustrated by way of example and not limitation in the figures of the accompanying drawings in which like references indicate similar elements.
Figure 1 is a block diagram of one embodiment of a system that includes a network element communicating network data to other network elements and using a network policy to process the network data communicated with the other network elements.
Figure 2 is a block diagram of one embodiment of a system that includes a network element that determines and applies a network policy for a port based on a configuration characteristic of a device that is connected to the network element via the port.
Figure 3 is a flow diagram of one embodiment of a process to determine and apply a network policy for a port based on a configuration characteristic of another device that is connected to the network element via the port.
Figure 4 is a flow diagram of one embodiment of a process to determine a device configuration signature.
Figure 5 is a flow diagram of one embodiment of a process to monitor and update an applied network policy for a port.
Figure 6 is a block diagram of one embodiment of a system that includes a network element that determines and applies a network policy for a port based on a configuration characteristic of a virtual switch coupled to the network element via the port.
Figure 7 is a block diagram of one embodiment of a system that includes a virtual switch that determines and applies a network policy for a port based on a configuration characteristic of a virtual machine coupled to the virtual switch via the port.
Figure 8 is a block diagram of one embodiment of a system that includes a network element that determines and applies a network policy for a port based on a configuration characteristic of a device coupled to the network element via the port and information about the device retrieved from a firewall.
Figure 9 is a block diagram of a network element policy engine that determines and applies a network policy for a port based on a configuration characteristic of another device that is connected to the network element via the port.
Figure 10 is a block diagram of a device configuration signature determination module that determines a network policy for the device.
Figure 11 is a block diagram of a monitor policy module that monitors the applied network policy for an update.
Figure 12 illustrates one example of a typical computer system, which may be used in conjunction with the embodiments described herein.
Figure 13 is a block diagram of one embodiment of an exemplary network element that determines and applies a network policy for a port based on a configuration characteristic of another device that is connected to the network element according to one embodiment of the system.

### DETAILED DESCRIPTION

A method and apparatus of a device that determines a network policy for an attached device based on one or more configuration characteristics of the attached device is described. In the following description, numerous specific details are set forth to provide thorough explanation of embodiments of the present invention. It will be apparent, however, to one skilled in the art, that embodiments of the present invention may be practiced without these specific details. In other instances, well-known components, structures, and techniques have not been shown in detail in order not to obscure the understanding of this description.

Reference in the specification to "one embodiment" or "an embodiment" means that a particular feature, structure, or characteristic described in connection with the embodiment can be included in at least one embodiment of the invention. The appearances of the phrase "in one embodiment" in various places in the specification do not necessarily all refer to the same embodiment.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

The processes depicted in the figures that follow, are performed by processing logic that comprises hardware (e.g., circuitry, dedicated logic, etc.), software (such as is run on a general-purpose computer system or a dedicated machine), or a combination of both. Although the processes are described below in terms of some sequential operations, it should be appreciated that some of the operations described may be performed in different order. Moreover, some operations may be performed in parallel rather than sequentially.

The terms "server," "client," and "device" are intended to refer generally to data processing systems rather than specifically to a particular form factor for the server, client, and/or device.

A method and apparatus of a device that determines a network policy for an attached device based on one or more configuration characteristics of the attached device is described. In one embodiment, a network element discovers a device attached to the network element. The network element discovers one or more characteristics of this attached device. For example and in one embodiment, the network element can discover the type of media used to connect the device, the IP and/or MAC address of the device, dynamic host configuration protocol (DHCP) options, a domain name system (DNS) name (e.g., partial DNS name, fully qualified domain name), Link Layer Discovery Protocol (LLDP) information, 802.1x supplicant information, security information, and/or information regarding virtual devices hosted by the attached device. Using these discovered device configuration characteristics, the network element creates a device configuration signature for the attached device. With the device configuration signature, the network element determines a network policy for the port that the device is attached to. The network element uses this policy to process network data communicated with the attached device through the port.

In one embodiment, the network element creates a model for binding configuration and provisioning policy to the device based on the device configuration signature and a corresponding network policy. This model can include the applied network policy for the device's configuration signature so that as the device moves, either because the device is physically re-cabled or because the device is a virtual element capable of moving to another host, that the corresponding network policy moves with the device and can stay persistently bound to that device regardless of which network element or interface is used to connect the device to the network.

To determine the configuration signature for the device, in one embodiment, the network element enters into a learning mode. In the learning mode, the network element creates a new port state for booting, where the network element learns what is on the device, appropriately intercepts and forwards DHCP requests/responses, but does not move the port into a forwarding state until the device configuration signature has been learned and the corresponding network policy has been determined and applied to the port. In the forwarding state, the port communicates network data with the device using an applied network policy. For example and in one embodiment, while in the learning mode, the network element can learn one or more of the following parameters: MAC Address, IP Address, DHCP information, LLDP Information, DNS Name, 802.1x supplicant ID, Media Type, security information, virtualization information, etc. In one embodiment, the network element stores the device signature configuration in a device ID record, which is then interrogated with a set of pre-programmed regular expressions to determine which policies to apply. Based on the result of matches, a set of named policies such as ACLs, Segmentation, QoS, and/or Virtual Network Segmentations are applied and the interface is moved to a forwarding state. In one embodiment, the applied network policy is this set of named policies.

In one embodiment, the network element determines if there are changes to the connectivity with the attached device, if the characteristics of the attached device change, and/or if there is a change to the applied network policy. If there is a loss of connectivity to the attached device (e.g., the link between the network device and the attached device goes down), the network device clears the policy applied to the corresponding port. If the characteristics of the attached device change, the network element determines an updated configuration signature for the device and determines a new network policy for the corresponding port. In addition, if there is a change to applied policy, the network element retrieves the updated network policy and applies it to the port.

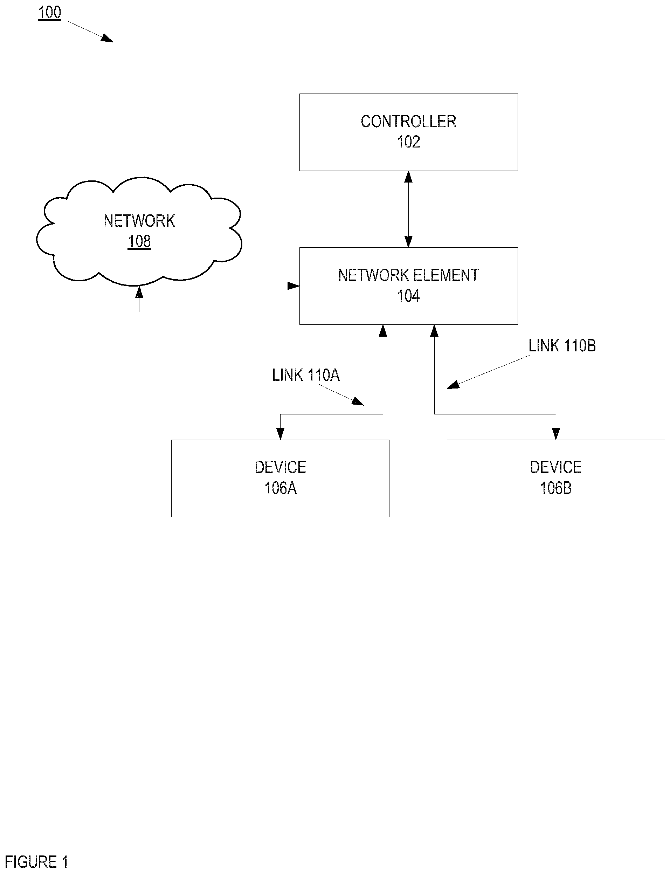

Figure 1 is a block diagram of one embodiment of a system 100 that includes network element 104 communicating network data with other devices 106A-B and uses a network policy on each of the corresponding ports to process the network data communicated with the other devices. In Figure 1, the network element 104 is coupled to devices 106A-B and to network 108. While in one embodiment the interconnection between the network element 104 and either device 106A-B and/or network 108 is a wired connection (e.g., copper, fiber, etc.,), in alternate embodiments, a different type of interconnection is used (e.g., wireless, a combination of wireless and wired, etc.). In addition, the different types of protocols can be used to communicate network data over the connection (e.g., Ethernet, wireless, Synchronous Optical Networking (SONET), Fiber channel, Infiniband, etc.). In one embodiment, network element 104 communicates network data between devices 106A-B and network 108 or between devices 106A-B using a variety of communicating techniques (e.g., layer 2 switching, layer 3 routing, traffic shaping, applying a quality of service (QoS) policy, etc.).

In one embodiment, the network element 104 is a device that provides network access to a network (e.g., physical network, virtualized network, etc.). A network element can be a switch, router, hub, bridge, gateway, etc., or any type of device that can allow access to a network. In one embodiment, the device 106A-B is any type of device that can communicate network data with another device (e.g., a personal computer, laptop, server, mobile device (e.g., phone, smartphone, personal gaming device, etc.), another network element, etc.). In one embodiment, the devices 106A-B can be a virtual machine or can be a device that hosts one or more virtual machines.

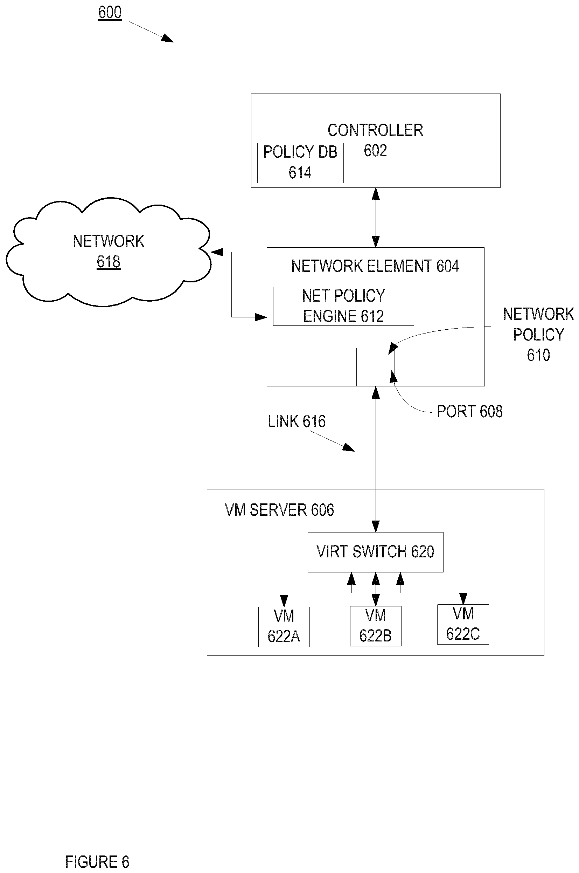

In one embodiment, the network element 104 uses a policy to process the network data that is communicated between the network element 104 and one of the devices 106A-B. In one embodiment, the network element 104 applies the policy to one of the ports of the network element. In this embodiment, the policy is a port-based policy that is used to process each packet of the network traffic communicated through the port. In one embodiment, the applied policy includes one or more network policy elements. Each of the network policy elements is an instruction on how different types of packets are processed when communicated using that port. For example and in one embodiment, each network policy element can be a Quality of Service policy (QoS), an Access Control List (ACL), or a Virtual Local Area Network (VLAN) policy. In addition, the network policy elements may apply to packets being transmitted from the port, packets being received on that port, or both. Examples of different types of network policies are illustrated in Figures 6-8 below.

As described above, an operator may assign a network policy to a port with an attached device (or potential attached device). This can present problems because the operator may assign the wrong policy on that port, install the device into the incorrect port, no policy is assigned to the port, and/or that a device coupled to one port moves to another port (e.g., a device de-coupling and moving from that port or a new device that comes up on that port). In one embodiment, instead of the operator manually assigning a policy to a port, the network element 104 discovers one or more configuration characteristics of the attached devices 106A-B and determines a network policy that should be applied to the port that the device is attached to. In this embodiment, characterizing the device coupled to the port according to one or more its configuration characteristics and determining a port-based policy for that device using one or more of these device configuration characteristics allows for matching an appropriate policy for this device without assistance from an operator. This embodiment can reduce the chance of a mismatching of a policy for the device/port combination, decrease the chance that a policy is not assigned to the port, and/or facilitate an automated bring up of a moving device.

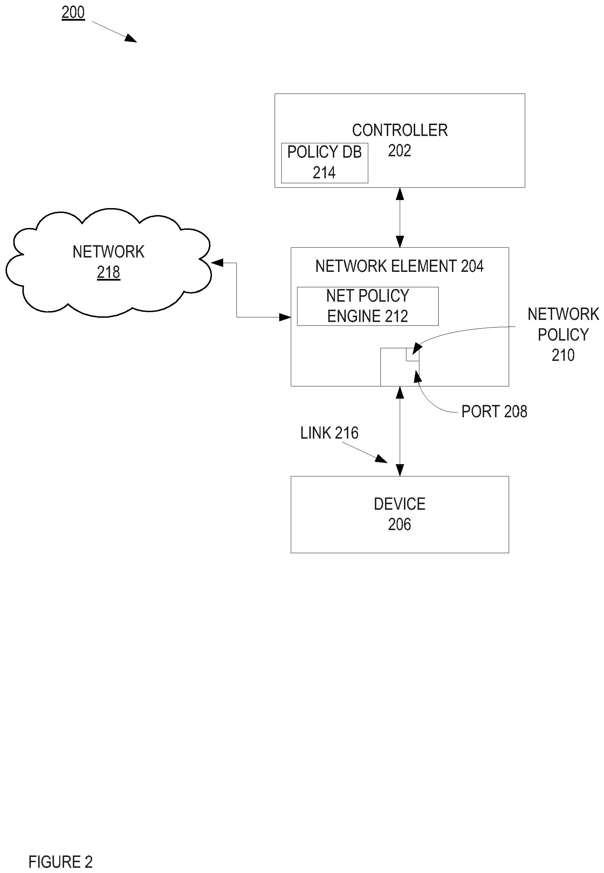

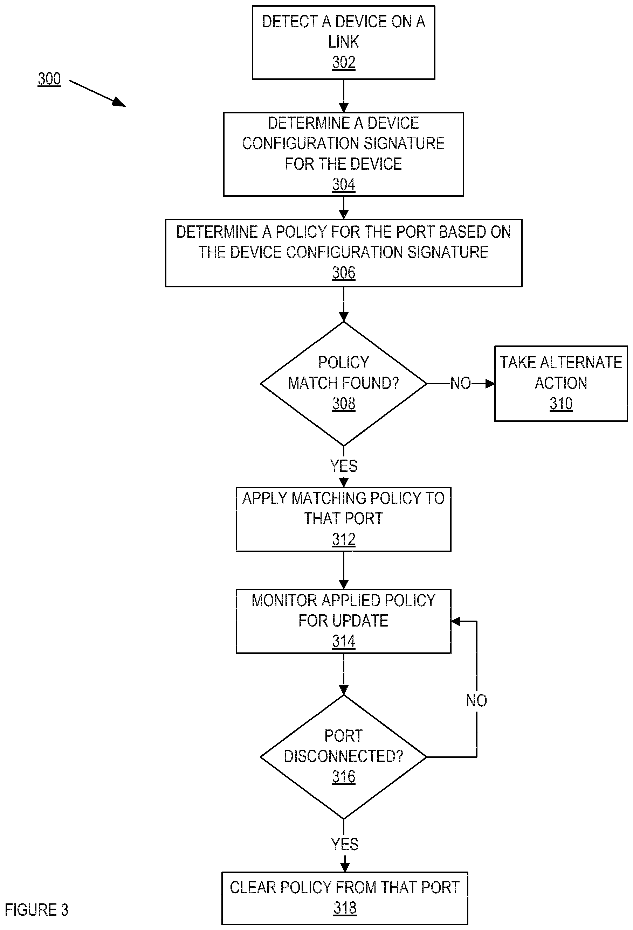

For example and in one embodiment, these configuration characteristics can be a type of media used to connect the device (e.g., Ethernet copper, Ethernet fiber, wireless, fiber wavelength, etc.), the IP and/or MAC address of the device, DHCP information, a DNS name (e.g., partial DNS name, fully qualified domain name), Link Layer Discovery Protocol (LLDP) information, 802.1x supplicant ID, security information, and/or information regarding virtual devices hosted by the attached device. In one embodiment, the network element 104 discovers one or more of these configuration characteristics of the attached device by querying the device for one or more of the different configuration characteristics. Thus, how the network traffic communicated with the attached device 106A-B is being processed by the network element 104 is based on one or more of the discovered configuration characteristics of device 104A-B and not directly based on the content of the network data itself. Determining and applying a port-based network policy is further described in Figures 2 and 3 below.

In one embodiment, the network element 104 discovers the characteristics of the device 106A-B prior to forwarding network data between the device 106A-B and the network 108. In one embodiment, after the device detection occurs, the network element 104 puts the port into a learning mode, where the network element 104 learns the configuration characteristics of the device 106A-B. In this learning mode, the port does not communicate network data with the device 106A-B, except for network data used to further configure the device (e.g., DHCP request and response).

Once the network element 104 discovers the configuration characteristics of the device 106A-B, the network element 104 determines a configuration signature for the device 106A-B and retrieves a network policy for the device 106A-B based on the configuration signature. In one embodiment, the network 104 determines the network policy matching the configuration signature of the device 106A-B by finding a matching configuration signature in a policy database on a controller 102. In one embodiment, the controller 102 is a server or other type of device that includes a database of named policies. One or more of the named policies can be used for the network policy. The network element 104 applies this policy to the attached port. With this network policy in place, the network element 104 applies the network policy to network data being forwarded through this port. In one embodiment, after the network element applies the network policy to the port, the network element puts the port into a forwarding state, where the port communicates network data with the device using the applied network policy. In one embodiment, the controller 102 is not a separate device, and the functionality of the controller is hosted on the network element 104.

In one embodiment, by determining and applying a network policy to a detected device, the network element 104 supports that migration of either device 106A-B from another place in the network. This is because the same network policy can be applied to this device whether the device is attached to one or another network element. Thus the port policy remains the same as the device moves, either because the device is physically re-cabled or because the device is a virtual element capable of moving to another host. This allows the corresponding network policy to move with the device and can stay persistently bound to that device regardless of which network element or interface is used to connect the device to the network.

Figure 2 is a block diagram of one embodiment of a system 200 that includes a network element 204 that determines and applies a network policy 210 for a port 208 based on a configuration characteristic of a device 206 that is connected to the network element 204 via the port 208. In Figure 2, the network element 204 is coupled to device 206 via port 208 and link 216. In addition, the network element 204 is coupled to a network 218. In one embodiment, the network element 204 communicates network data with the device 206 via port 208 using the network policy 210 and forwards network data between the device 206 and the network 218 via the port 208. The network policy 210 includes one or more network policy elements that the network element 204 uses to process network data being communicated through the port 208. In one embodiment, each of the network policy elements is an instruction on how different types of packets are processed when communicated using that port. For example and in one embodiment, each network policy element can be a QoS policy, an ACL, or a VLAN/VXLAN policy. As an example, the network policy element can be a QoS policy that sets a certain rate for the some or all network data being communicated through the port 208, can apply traffic shaping to the communicated network policy, allow/disallow data bursting, etc. In addition, the network policy element can be an ACL that can rewrite and/or remark the network data, and/or allow and/or disallow forwarding of network data with certain characteristics (e.g., source destination IP or MAC address, VLAN tag, and/or any other data that is in the network data header or payload). Furthermore, the network policy element can be a VLAN or VXLAN policy. In one embodiment, the VLAN policy is a policy that tags packets of the network data with a VLAN tag upon either entering or exiting the port, or allows/disallows network data forwarding based on a VLAN tag. A VXLAN policy is a policy that encapsulates or deencapsulates the packets of the network data for a particular VXLAN identifier.

In one embodiment, the network policy engine 212 determines which network policy 210 to apply the port 208. In this embodiment, the network policy engine 212 detects the device 206 being attached to the port 208 via the link 216. For example and in one embodiment, the network policy engine 212 detects the device 206 as being attached to the port 208 via the link 216 because a link up event is detected on the port 208 for link 216.

In response to the device 206 being detected on the link 216, the network policy engine 212 discovers the characteristics of the attached device 206. As described above, these characteristics can be a type of media used for the link 216 (e.g., Ethernet copper, Ethernet fiber, wireless, etc.), the IP and/or MAC address of the device, a DNS name (e.g., partial DNS name, fully qualified domain name), LLDP information, DHCP information, 802.1x supplicant ID, security information, and/or information regarding virtual devices hosted by the attached device. In one embodiment, the network policy engine 212 discovers the characteristics of the attached device 206 by querying the attached device 206 for the characteristics. In one embodiment, the network policy engine 212 discovers the type of link media for link 216 by querying the configuration of the link 216. For example and in one embodiment, the link 216 can be configured as Ethernet copper, Ethernet fiber, wireless, etc.

In one embodiment, the network policy engine 212 determines the IP and/or MAC addresses by querying the device 206 for the IP and/or MAC address. For example and in one embodiment, the network policy engine 212 can listen for an Address Resolution Protocol (ARP) announcement from the device 206 to determine the MAC address of the device 206. With the MAC address of the device 206 known to the network policy engine 212, the network policy engine 212 can perform an inverse ARP request to learn the IP address of the device 206. Alternatively, the network policy engine can learn of the IP address from an intercepted DHCP acknowledgement as is described below.

In addition and in one embodiment, the network policy engine 212 can determine a DNS name of the device 206. In one embodiment, the network element 204 further includes a secondary DNS server to provide redundancy for a primary DNS server in the network 218. In this embodiment, the network policy engine 212 retrieves the DNS name for the device 206 by doing a reverse DNS lookup from the secondary DNS server using the IP address of the device 206. The determined DNS name can be a fully qualified domain name or a partial domain name.

In one embodiment, the network policy engine 212 can retrieve LLDP information from the device, if present. In this embodiment, the network element 204 includes a LLDP agent (not illustrated) to receive LLDP information from a transmitting LLDP agent on the device 206. In one embodiment, the type of LLDP information that can be retrieved is: system name, system description (e.g., hardware type, operating system, networking software supported, etc.), system capabilities (e.g., router, bridge, etc.), and/or other type of LLDP information that can be available (e.g., virtualization information). Furthermore, in this embodiment, the network policy engine 212 retrieves the LLDP information from the LLDP agent on the network element 204.

The network policy engine 212, in one embodiment, can further retrieve DHCP information from the device, if present. In one embodiment, the network policy engine 212 has access to DHCP information that is being sent to the device 206. For example and in one embodiment, the network element 204 includes a DHCP relay (not illustrated) that is used to forward DHCP requests from the device 206 to a DHCP server and to forward DHCP responses that include the DHCP information for the device 206. In this embodiment, the network element 204 can intercept the DHCP response that is for device 206 and forward a copy of the DHCP response to network policy engine 212. The network policy engine can interrogate this DHCP response for an assigned IP address and/or other DHCP options that are stored in the DHCP response subnet mask, default gateway, DNS server information, and/or other DHCP information stored as a DHCP option.

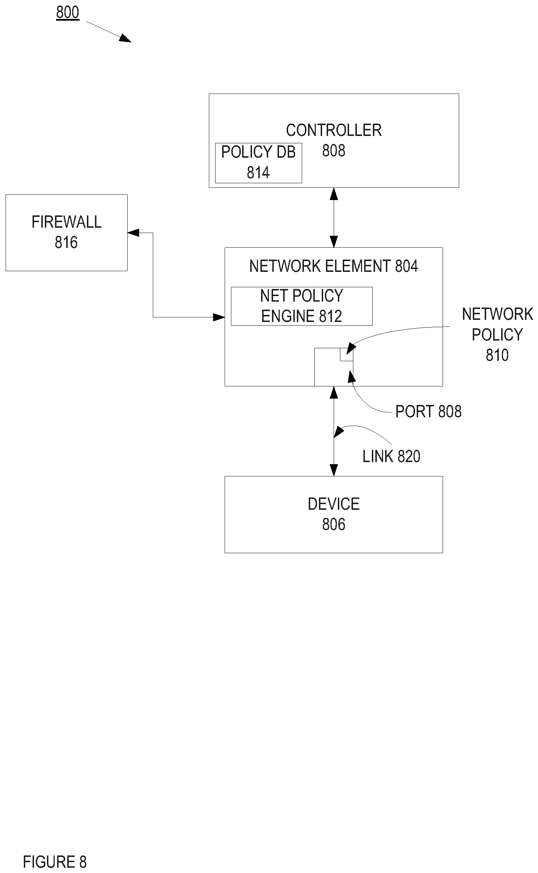

In addition, and in one embodiment, the network policy engine 212 can retrieve security information regarding the device 206 and information regarding any virtual machines hosted by the device 206. In one embodiment, the network policy engine 212 can retrieve security information from a security device (not illustrated) coupled to the network element 204. For example and in one embodiment, the network element 204 is coupled to a firewall or other security device. In this example, the network element 204 retrieves information of other devices (e.g., IP or MAC addresses, etc.) that pose a security risk. As will be described in Figure 8 below, the network element 204 could identify that one of these other devices is attached in the port 208 by comparing the security information with the characteristics of the discovered device 206.

In another embodiment, the network policy engine 212 determines information regarding any virtual machine hosted by the device 206. In one embodiment, the physical device hosting virtual machines can retrieve LLDP information from the virtual machines hosted by the physical device. While in one embodiment, the device 206 is the physical device hosting the virtual machines, in alternate embodiments, the device 206 represents one or more virtual machines hosted by the physical device.

In one embodiment, using the determined characteristics of the device 206, the network policy engine 212 generates a configuration signature of the device 206. In one embodiment, the configuration signature is a tuple of the one or more configuration characteristics of the device 206. With the device configuration signature of device 206, the network policy engine 212 finds a matching network policy for the port 208. In one embodiment, the network policy engine 212 finds a matching network policy from a policy database 214 on the controller 202. While in one embodiment, the network policy engine 212 attempts to match a plurality of device configuration characteristics of the device configuration signature to arrive at an overall network policy, in another embodiment, each matching device characteristic corresponds to one network policy element for the network policy. In one embodiment, the policy database 214 includes a plurality of network policies that each has a corresponding matching signature.

In one embodiment, a match can be found by determining a match for each of the individual device configuration characteristics. Each of the individual matches can be either a partial or a full match. For example and in one embodiment, if the device 206 has a domain name of device 1 .company.com, a match of that characteristic can be "device1.company.com" (a full match) or "*.company.com" (a partial match). In this embodiment, there are multiple matches for the DNS name. In one embodiment, the policy database 214 finds the longest match. For example and in one embodiment, the full DNS name match is the longest match (e.g., "device1.company.com). In one embodiment, the policy database 214 finds a match for the device that matches that most number of individual characteristics (e.g., by number, by most full matches, most partial matches, etc.). For example and in one embodiment, the policy database 214 applies a regular expression to determine a match to each of the individual configuration characteristics.

In another embodiment, the policy database 214 attempts to find a match for each individual device configuration characteristic. In this embodiment, for each match, the policy database 214 identifies one or more corresponding network policy elements that will be used for the network policy. For example and in one embodiment, if the DNS name includes the string "esx" in the DNS name, this could mean that the device is hosting virtual machines. This match could correspond to a set of network policy elements, such as to turn on VLAN trunking, forward network traffic with VLAN tags 5 and 6, and to drop other or non-VLAN tag network data. In one embodiment, the one or more corresponding policy elements are described in a policy application language. In this embodiment, the policy application language (PAL) is a collection of matching criterion that is used against a port signature to determine which policies to apply. In this embodiment, the PAL is the set of rules that determine which ACLs, QoS, etc. to apply against a given interface. This way, the policy database 214 can distribute policies as port profiles or global named instances of a policy. In addition, the policy database 214 can also distribute PAL. For example and in one embodiment, in a situation where a central controller or management station is disconnected, each switch will has enough information to correctly identify and bind policy to a new host.

With a match for the device configuration signature of device 206, the network policy engine 212 retrieves a corresponding network policy from the policy database 214. The network policy engine 212 applies the corresponding network policy to the port 208, so that this corresponding network policy becomes the network policy 210. The network element 204 uses this network policy to process network data communicated through the port 208. In one embodiment, each port of the network element has a separate network policy. The port policies can be the same or different for each port. In one embodiment, the network element 204 applies the network policy 210 to the port 208 prior to the communication of network data between the device 206 and the network 218. In one embodiment, after the network policy engine 212 applies the network policy 210 to the port 208, the network policy engine 212 puts the port into a forwarding state, where the port communicates network data with the device using the applied network policy.

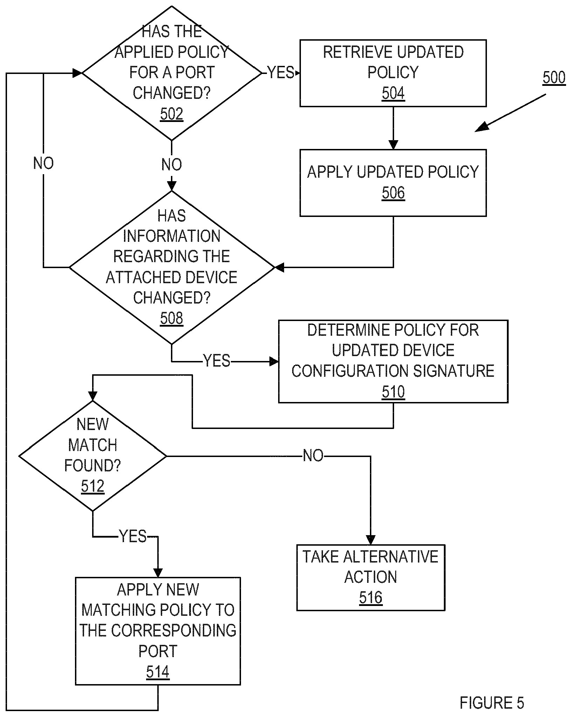

In one embodiment, after the network policy engine 212 applies the network policy 210 to the port 208, the network policy engine 212 monitors for conditions that warrant a change to the network policy 210. For example and in one embodiment, the network policy engine 212 determines if there are changes to the connectivity with the attached device 206, if the characteristics of the attached device 204 change, and/or if there is a change to the network policy 210. If there is a loss of connectivity to the attached device 206 (e.g., the link between the network device and the attached device goes down), the network policy engine 212 clears the network policy 210 applied to the corresponding port 208. If the characteristics of the attached device 206 change, the network policy engine 212 determines an updated device configuration signature of the device 206 and determines a new network policy for the corresponding port 208. In addition, if there is a change to applied policy, the network policy engine 212 retrieves the updated network policy and applies it to the port 208. In one embodiment, the change in the applied policy can be a global change to the policy or can be a local change. A global change to the applied policy is a change that is made in the policy database 214 on the controller. In this embodiment, the global change is replicated out to the network element 204 and any other network elements that use this policy for one of the ports. A local change is a change to the applied policy that is for that policy on the port 208. This change can be updated and replicated out, via the policy database 214, to other network elements that use this policy. In another embodiment, the changed applied policy is renamed and used for this port 208. Monitoring and updating the network policy 210 is further described in Figure 5 below.

Figure 3 is a flow diagram of one embodiment of a process 300 to determine and apply a network policy for a port based on a configuration characteristic of another device that is connected to the network element via the port. In one embodiment, a network policy engine performs process 300 to determine and apply a network policy for the port, such as the network policy engine 212 described in Figure 2 above. In Figure 3, process 300 begins by detecting a device on a link at block 302. In one embodiment, process 300 detects a device on the link by detecting a link up event on that link. For example and in one embodiment, process 300 detects a link going up because a device has powered up on the other end of the link. In one embodiment, process 300 puts the port into a learning state after it detects a link, as described above.

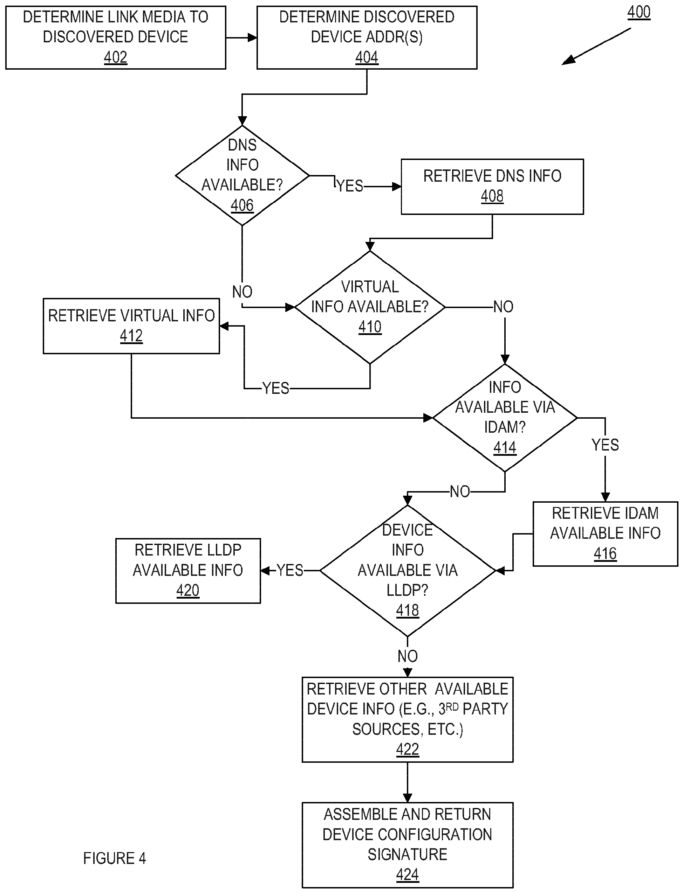

At block 304, process 300 determines a device configuration signature for device. In one embodiment, process 300 determines one or more characteristics for the device, such as a type of media used for the link (e.g., Ethernet copper, Ethernet fiber, wireless, etc.), the IP and/or MAC address of the device, a DNS name (e.g., partial DNS name, fully qualified domain name), LLDP information, security information, and/or information regarding virtual devices hosted by the attached device. Using these determined characteristics, process 300 determines a device configuration signature. In one embodiment, process 300 creates a tuple of the determined characteristics. Determining the device configuration signature is further described in Figure 4 below.

Process 300 determines a network policy for the device configuration signature at block 306. In one embodiment, process 300 sends a request to a policy database to find a network policy that corresponds to the device configuration signature. In this embodiment, the policy database finds a match for the device configuration signature and returns a network policy that corresponds to the match to process 300. In one embodiment, a match can be found by determining a match for each of the individual device characteristics. For example and in one embodiment, if the device has a domain name of device1.company.com, a match of that characteristic can be "device1.company.com" (a full match) or "*.company.com" (a partial match). In this embodiment, there are multiple matches for the DNS name. In one embodiment, the policy database would find the longest match. For example and in one embodiment, the full DNS name match is the longest match (e.g., "device1.company.com). In one embodiment, the policy database finds a match for the device that matches that most number of individual characteristics (e.g., by number, by most full matches, most partial matches, etc.). For example and in one embodiment, the policy database applies a regular expression to determine a match.

At block 308, process 300 determines if a network policy match was found. If no network policy match was found, process 300 takes alternative action at block 310 (e.g., raise an alert or error, do not communicate network data, brings the link down, put the device into a quarantine (e.g., put the device into a private VLAN), assign a default set of policies, block the device by disabling the device, apply a redirecting policy so that the network data from the device goes to a security appliance or is mapped to a specific instance of a virtual routing and forwarding (VRF) table, etc.) If the matching network policy is found, at block 312, process 300 applies the matching network policy to the port that the device is attached to via the link. In one embodiment, once the network policy is applied, the network element can communicate network data with the attached device. In one embodiment, process 300 puts the port into a forwarding state, as is described above.

Process 300 monitors the applied network policy for updates at block 314. In one embodiment, process 300 determines if the applied network policy or the characteristics of the device have changed. If either the applied network policy or device characteristics have changed, process 300 determines a new network policy for the port. Monitoring the applied network policy is further described in Figure 5 below.

At block 316, process 300 further determines if the device has disconnected from the port. In one embodiment, the device may disconnect from the port because the device has powered down, the port of the device has gone down, there is a loss of link between the device and the network element, etc. If process 300 does not detect a disconnection, execution proceeds to block 314 above. If process 300 does detection a disconnection, process 300 clears the network policy from the port at block 318. In one embodiment, process 300 clears the policy from the port so that process 300 can discover and apply an appropriate network policy if process 300 detects a device on the link for that port.

As described above, process 300 determines a device configuration signature based on one or more discovered configuration characteristics of the device. Figure 4 is a flow diagram of one embodiment of a process 400 to determine a device configuration signature. In one embodiment, a network policy engine performs process 400 to determine a device configuration signature, such network policy engine 212 as described in Figure 2 above. In one embodiment, process 300 of Figure 3 at block 304 above performs process 400 to determine a device configuration signature. In Figure 4, process 400 begins by determining a link media for the link that attaches the discovered device at block 402. In one embodiment, process 400 queries the configuration of the network element performing process 400 to determine the link media of that port.

At block 404, process 400 determines the address(es) of the discovered device. In one embodiment, process 400 determines the MAC and IP address of this device. In this embodiment, process 400 can listen for an ARP announcement from the discovered device to determine the MAC address of the device. In another embodiment, process 400 learns the MAC address of the device using DHCP, LLDP, and/or 802.1x supplicant information. With the MAC address of the device known to process 400, process 400 can perform an inverse ARP request to learn the IP address of the device. In a further embodiment, process 400 determines the IP address of the device by retrieving the IP address from the DHCP inspection of the response or running an open source tool (e.g., arping) to learn the IP address using the device MAC address. In another embodiment, if the device is an IP device, process 400 can snoop the normal ARP process between this device and another device to learn the IP address of the discovered.

Process 400 determines if there is any DNS information about the discovered device at block 406. In one embodiment, process 400 retrieves the DNS information for the discovered device from a secondary DNS that is local to the network element performing process 400 and provides redundancy for a primary DNS. In this embodiment, process 400 retrieves the DNS name for the device by doing a reverse DNS lookup using the IP address of the device. In one embodiment, the determined DNS name can be a fully qualified domain name or a partial domain name. If the DNS information is available for the discovered device, process 400 retrieves the DNS information at block 408. Execution proceeds to block 410 below. If the DNS information is not available, execution proceeds to block 410 below.

At block 410, process 400 determines if there is information regarding the virtual machines associated with the discovered device. In one embodiment, a virtual machine is a software implementation of a machine (e.g. a computer, switch, etc.) that executes programs like a physical machine. The virtual machine can be a system virtual machine that provides a virtualized operating system platform to run one or more applications (e.g., hardware virtualization). In one embodiment, the discovered device could be hosting virtual machines and process 400 can retrieve LLDP information regarding the virtual machines hosted by the discovered device. While in one embodiment, the discovered device is a physical device hosting the virtual machines, in alternate embodiments, the discovered device represents one or more virtual machines hosted by the physical device. Retrieving LLDP information is further described below with reference to block 418 below. If there is information available regarding the virtual machines associated with the discovered device, at block 412, process 400 retrieves the virtual information. For example and in one embodiment, process 400 retrieves a hostname, IP address, and interface of the device via LLDP. With this information, process 400 can use this information to query a virtual server management system to retrieve the server and associated virtual machine policies for this device, such as Network Input/Output Control (NIOC). In one embodiment, process 400 uses Intelligent Platform Management Interface (IPMI) to read the server and associated virtual machine policies for the device. As an example, the discovered device is an ESX server that is hosting one or more virtual machines. Process 400 can discover the hostname, IP address, and interface of the ESX server. With this ESX information, process 400 interrogates the vCenter and/or vSphere that are associated with this ESX server for information that is available via NIOC for this server. Execution proceeds to block 414 below. If there is no information regarding virtual machines, execution proceeds to block 414 below.

Process 400 determines if there is any information available via DHCP at block 414. If there is DHCP information, process 400 retrieves this information at block 416. In one embodiment, process 400 can access DHCP information that is being sent to the discovered device. For example and in one embodiment, process 400 receives the DHCP information from the network element that includes a DHCP relay as described in Figure 2 above. Execution proceeds to block 418 below. If there is not any DHCP information, execution proceeds to block 418 below.

At block 418, process 400 determines if there is LLDP information available regarding the discovered device. If there is available LLDP information, process 400 retrieves this information at block 420. In one embodiment, process 400 retrieves the LLDP information from the discovered device. In this embodiment, the network element executing process 400 includes a LLDP agent to receive LLDP information from a transmitting LLDP agent on the discovered device. In one embodiment, the type LLDP information that can be retrieved is: system name, system description (e.g., hardware type, operating system, networking software supported, etc.), system capabilities (e.g., router, bridge, etc.), virtual machine information, and/or other type of LLDP information that can be available. Execution proceeds to block 422 below. If there is no LLDP information available, execution proceeds to block 422 below.

Process 400 retrieves any further available information from other sources in block 422. In one embodiment, process 400 may retrieve information regarding the device from third party sources. For example and in one embodiment, process 400 can get information from a firewall or other security device that indicates that the discovered device could pose a security risk to the network. Alternatively, process 400 can get load balancing information from a load balancing device. For example and in one embodiment, if the process 400 can utilize an application programming interface (API) for a third party device (e.g., a firewall, server load balancer, or other third party device), process 400 can interrogate this third party device (or the third party device management system) to get more information regarding this discovered device (e.g., firewall policies, server load balancer very important person policies, etc.) In another embodiment, process 400 retrieves the 802.1x supplicant ID. In this embodiment, the 802.1x is a challenge authentication system for Ethernet LANs where the connecting host (e.g., the supplicant) sends a username/password to the switch. Based on this challenge authentication system, process 400 can retrieve information about the discovered device (e.g., the supplicant ID, MAC address, IP address, etc.) At block 424, process 400 assembles and returns a device configuration signature. In one embodiment, the device configuration signature is a tuple of the one or more configuration characteristics of the device.

As described above, process 300 monitors and updates an applied network policy for a port that has the applied network policy if the applied network policy changes or information regarding the device has changed. Figure 5 is a flow diagram of one embodiment of a process 500 to monitor and update an applied network policy for a port. In one embodiment, process 500 is performed by process 300 as described in Figure 3 at block 314 above. In Figure 5, process 500 begins by determining if the applied network policy for a port has changed at block 502. In one embodiment, process 500 determines that the policy has changed by subscribing to publications of changes to the applied network policy. For example and in one embodiment, the controller includes an Extensible Messaging and Presence Protocol (XMPP) process that publishes changes to network policies for entities that wish to subscribe to those changes. In this embodiment, process 500 subscribes to the network polices of interest. If the XMPP process notifies process 500 that the network policy has been updated, process 500 retrieves the updated network policy. In one embodiment, an update to a network policy includes a change to one or more network policy elements of the network policy.

If the network policy for this port is not updated, execution proceeds to block 508. If the network policy has been updated, process 500 retrieves the updated policy at block 504. In one embodiment, process 500 retrieves the updated network policy from a controller as described in Figure 2 above. At block 506, process 500 applies the updated network policy to the corresponding port. In one embodiment, process 500 clears the applied network policy and applies the updated network policy. In another embodiment, process 500 replaces the existing applied network policy with the updated one. Execution proceeds to block 508.

Process 500 determines if the configuration characteristic information regarding the device has changed at block 508. In one embodiment, a change in the configuration includes a change in the address of the device, DNS information, LLDP information, DHCP information, security information, and/or information regarding virtual devices hosted by the device. For example and in one embodiment, if the device is initially characterized by LLDP as being a switching device and is later identified by LLDP as a routing device, process 500 identifies the device's configuration characteristics as changing. If the configuration characteristic information regarding the device has not changed at block 508, execution returns to block 502 and process 500 starts again. If the configuration characteristic information regarding the device has changed at block 508, then execution proceeds to block 510.

At block 510, process 500 determines a network policy for the updated device configuration signature. In one embodiment, process 500 sends a request to a policy database to find a network policy that corresponds to the updated device configuration signature, such as the policy database 214 as described in Figure 2 above. In this embodiment, the policy database finds a match for the device configuration signature and returns a network policy that corresponds to the match to process 500. If there is a match, process 500 determines if this network policy is different than the currently applied network policy for the port at block 512. In one embodiment, process 500 determines if the new network policy is different by comparing the content of the two policies, policy identifiers, etc.

If no new match is found, at block 516, process 500 takes alternative action (e.g., raise an alert or error, do not communicate network data, brings the link down, put the device into a quarantine (e.g., put the device into a private VLAN), assign a default set of policies, block the device by disabling the device, apply a redirecting policy so that the network data from the device goes to a security appliance or is mapped to a specific instance of a VRF table, etc.). If the matching network policy is different from the currently applied network policy, process 500 applies the matching network policy to the port at block 514. Execution returns to block 502 and process 500 starts again.

Figure 6 is a block diagram of one embodiment of a system 600 that includes a network element 604 that determines and applies a network policy 610 for a port 608 based on a configuration characteristic of a virtual switch 620 coupled to the network element 604 via the port 608. In Figure 6, the network element 604 is coupled to virtual switch 620 via port 608 and link 616. In addition, the network element 604 is coupled to a network 618. In one embodiment, the network element 604 communicates network data with the virtual switch 620 via port 608 using the network policy 610 and forwards network data between the virtual switch 620 and the network 618 via the port 608. The network policy 610 includes instructions on how the network element is to process network data being communicated through the port 608. In one embodiment, the network policy includes one or more network policy elements. Each of the network policy elements is an instruction on how different types of packets are processed when communicated using that port 608.

In one embodiment, a virtual machine server 606 hosts the virtual switch 620 and a plurality of virtual machines 622A-C. In one embodiment, the virtual switch 620 is a virtualized device to switch network data between the virtual machines 622A-C and between each of the virtual machines 622A-C and the network element 604. In one embodiment, the virtual switch 620 has capabilities similar to a physical switch except that the virtual switch 620 is instantiated as needed and hosted by the virtual machine server 606. In one embodiment, each of the virtual machines 622A-C is a software implementation of a machine (e.g. a computer, server, etc.) that executes programs like a physical machine. The virtual machine 622A-C can be a system virtual machine that provides a virtualized operating system platform to run one or more applications (e.g., hardware virtualization).

In one embodiment, the network policy engine 612 discovers the virtual switch 620 coupled to the link 616. In one embodiment, the link 616 is physically attached to the virtual machine server 606 and an uplink port (not illustrated) of the virtual switch is coupled to the link 616. In one embodiment, the network policy engine 612 can discover that the virtual machine server 606 includes a virtual machine kernel and interface. Alternatively, the virtual machine server 606 characteristics can include IP address, MAC address, domain name (e.g., *esx*.domainname), or LLDP information that can indicate that a virtual switch 620 is present on the virtual machine server 606. The network policy engine 612 uses the retrieved hostname, IP address, and/or interface of the virtual machine server 606 to query a virtual server management system to retrieve the server and associated virtual machine policies for this virtual machine server 606. In one embodiment, the network policy engine 612 retrieves the server and associated virtual machine policies for this virtual machine server 606 as described above in Figure 4, block 412. In this embodiment, based on the discovered virtual switch 620 configuration signature, a matching network policy could be to turn on 802.1q VLAN trunking, turn on port fast, and apply an ACL that is appropriate for a virtualized switch and network. In one embodiment, port fast is a mode where the virtual switch 620 skips the Spanning Tree Blocking phase and moves straight from learning to forwarding so that single-homed hosts (e.g., virtual machines 622A-C) with no loops can come up fast enough that the DHCP requests for each VM 622A-C are not blocked by the virtual switch 620.

For example and in one embodiment, the virtual switch 620 is configured for VLAN 5 on network traffic between VM 622A and the virtual switch 620 and VLAN 6 on network traffic between VM 622B and the virtual switch 620. In addition, there is network input/output control policy that indicates that there is a one gigabit/second (Gbs) data rate policy between the VM 622A-C and the virtual switch 620 and a one Gbs limitation on virtual machine 622A-C migrations to another virtual machine server. Based on this configuration signature for the virtual switch 620, a matching network policy for the port 608 would be one that turns on 802.1q trunking that allows VLAN network data tagged with VLANs 5 and 6 to be communicated, to block other VLAN tagged traffic, to prune other identified VLANs on this port, and to impose a data rate limit of one Gbs on the data traffic communicated to the virtual switch.

In one embodiment, the network policy engine 612 sends the virtual switch 620 characteristic signature to the policy database 614 on the controller 602 to determine the matching network policy. For example and in one embodiment, the network policy engine 612 determines the matching network policy using the policy database 614 as described in Figure 2 above. In one embodiment, the network policy engine 612 applies the matching network policy to the port 608 where this matching network policy becomes the network policy 610 for the port 608.

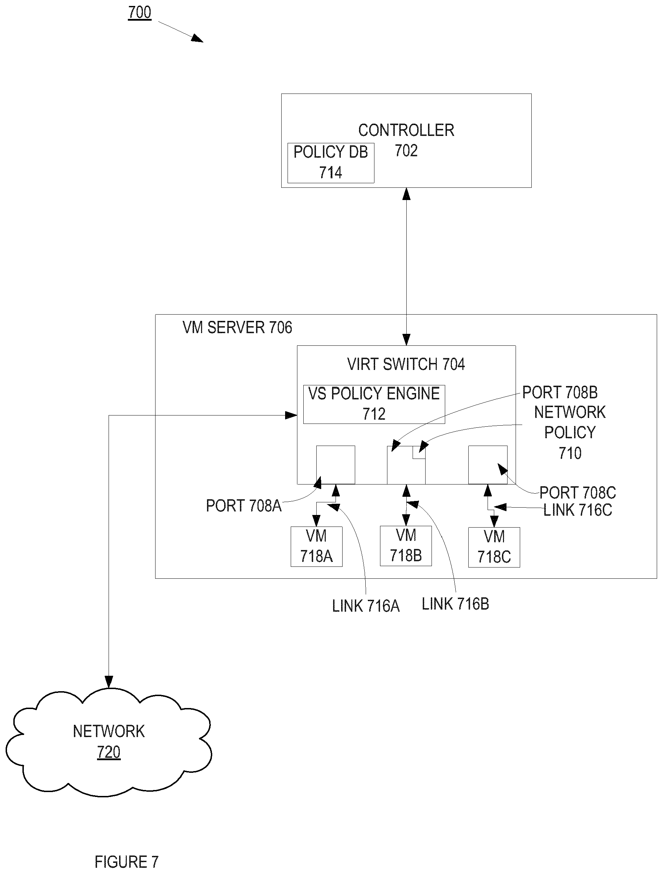

In Figure 6 above, a network policy engine 612 discovers an attached virtual switch 620 and determines a network policy for a physical port coupled to the attached virtual switch 620 based on the configuration of that virtual switch 620. In this embodiment, the network element 604 is a physical network element. In another embodiment, a network policy engine can be part of a running virtual switch to discover one or more virtual machines and apply a network policy for virtual port(s) coupled to the one or more virtual machines. Figure 7 is a block diagram of one embodiment of a system 700 that includes a virtual switch 704 that determines and applies a network policy for a virtual port 708B based on a configuration characteristic of a virtual machine 718B coupled to the virtual switch 704 via the virtual port 708B. In Figure 7, the system 700 includes a virtual machine server 706 coupled to a controller 702 and a network 720. The virtual machine server 706 hosts a virtual switch 704 and virtual machines 718A-C. While in one embodiment, the virtual server 706 hosts one virtual switch 704 and three virtual machines 718A-C, in alternate embodiments, the virtual server 706 can host more or less virtual machines and/or virtual servers.

In one embodiment, the virtual switch 704 includes a virtual switch policy engine 712 and ports 708A-C. Each port 708A-C couples a corresponding virtual machine 718A-C to the virtual switch 704 via a corresponding virtual link 716A-C. One of the ports, port 708B includes a network policy 710 that was determined by virtual switch policy engine 712. In this embodiment, the virtual switch policy engine 712 discovers the virtual machine 718B attached to the port 708B and determines the network policy 710 based on the discovered characteristics of the virtual machine 718B.

In one embodiment, this type of automatic discovery and provisioning for virtual environment can be beneficial in a virtualized environment. With the advent of cloud computing and offerings of infrastructure as a service (IaaS), platform as a service (PaaS), and software as a service (SaaS) by service providers, service offerings are provisioned and torn down for customer frequently. Each time a virtual machine is provisioned, the network to support this virtual machine needs to be provisioned as well. By having the virtual switch discover a newly provisioned virtual machine and configuring the virtual port for that newly provisioned virtual machine, the automatic provisioning of the virtual networking resource can reduce the change of operator error in provisioning the virtual machine.

Figure 8 is a block diagram of one embodiment of a system 800 that includes a network element 804 that determines and applies a network policy for a port 808 based on a configuration characteristic of a device 806 to the network element 804 via the port 808 and information about the device 806 retrieved from a firewall 816. In Figure 8, system 800 includes a network element 804 coupled to a controller 808 and a firewall 816. In one embodiment, the network element 804 communicates network data with the device 806 via port 808 using the network policy 810 and forwards network data between the device 806 and the firewall 816 via the port 808. The network policy 810 includes instructions on how the network element is to process network data being communicated through the port 808. In one embodiment, the network policy includes one or more network policy elements. Each of the network policy elements is an instruction on how different types of packets are processed when communicated using that port 808.

In one embodiment, the network policy engine 812 discovers the device 806 coupled to the link 820. In this embodiment, the network policy engine 812 determines a device configuration signature based on one to more characteristics of the device 806 retrieved from the device. For example and in one embodiment, the network policy engine 812 determines the link media type, MAC address, IP address, DNS information, LLDP information, 802.1x information, virtualization information, and/or a combination thereof. In addition, the network policy engine 812 can retrieve security related information regarding the device from the firewall 816. In one embodiment, the network policy engine 812 retrieves security information of device addresses that are suspected of participating in an attack or intrusion. If an address of the device 806 matches one of the security information addresses retrieved by the network policy engine 812, the network policy engine 812 adds that the device 806 is a security risk as part of the device 806 configuration signature. In this embodiment, a matching network policy for this device 806 can be a network policy that rate limits transmission of data received from the device 806, drop the data, apply an appropriate ACL, rate limit, redirect traffic to a monitor/mirror port, or redirect all traffic to a new destination/transparent proxy such as an intrusion detection or intrusion prevention system.

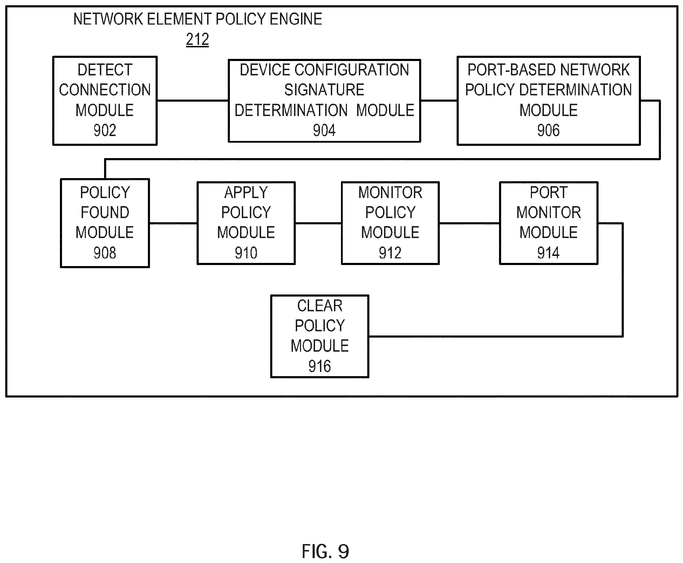

Figure 9 is a block diagram of a network element policy engine 212 that determines and applies a network policy for a port based on a configuration characteristic of another device that is connected to the network element via the port. In one embodiment, the network policy engine 212 includes a detect connection module 902, device configuration signature determination module 904, port-based network policy determination module 906, policy found module 908, apply policy module 910, monitor policy module 912, port monitor module 914, and clear policy module 916. In one embodiment, the detect connection module 902 detects the device connecting on a port as described in Figure 3, block 302 above. The device configuration signature determination module 904 determines the device configuration signature as described in Figure 3, block 304 above. The port-based network policy determination module 906 determines a network policy for the device as described in Figure 3, block 306 above. The policy found module 908 determines if a matching network policy is found as described in Figure 3, block 308 above. The apply policy module 910 applies the matching network policy as described in Figure 3, block 312 above. The monitor policy module 912 monitors the applied network policy for an update as described in Figure 3, block 314 above. The port monitor module 914 determines if the port is disconnected as described in Figure 3, block 316 above. The clear policy module 916 clears the network policy applied to the port as described in Figure 3, block 318 above.

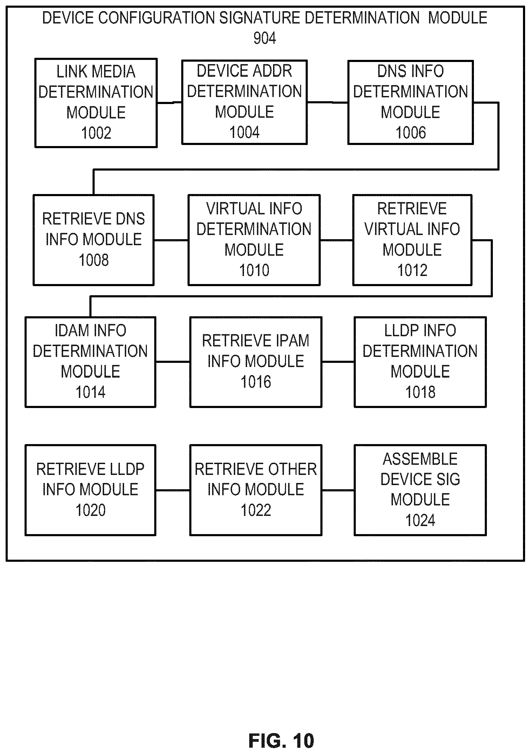

Figure 10 is a block diagram of a device configuration signature determination module 904 that determines a network policy for the device. In Figure 10, the device configuration signature determination module 904 includes a link media determination module 1002, device address determination module 1004, DNS information determination module 1006, retrieve DNS information module 1008, virtual information determination module 1010, retrieve virtual information module 1012, LLDP information determination module 1014, retrieve LLDP information module 1016, DHCP information determination module 1018, retrieve DHCP information module 1020, retrieve other information module 1022, and assemble device configuration signature module 1024. In one embodiment, the link media determination module 1002 determines the link media type as described in Figure 4, block 402 above. The device address determination module 1004 determines the device address(es) as described in Figure 4, block 404 above. The DNS information determination module 1006 determines if there is DNS information available as described in Figure 4, block 406 above. The retrieve DNS information module 1008 retrieves the DNS information as described in Figure 4, block 408 above. The virtual information determination module 1010 determines if there is virtual information available as described in Figure 4, block 410 above. The retrieve virtual information module 1012 retrieves the virtual information as described in Figure 4, block 412 above. The LLDP information determination module 1014 determines if there is LLDP information available as described in Figure 4, block 418 above. The retrieve LLDP information module 1016 retrieves the LLDP information as described in Figure 4, block 420 above. The DHCP information determination module 1018 determines if there is DHCP information available as described in Figure 4, block 414 above. The retrieve DHCP information module 1020 retrieves the DHCP information as described in Figure 4, block 416 above. The retrieve other information module 1022 retrieves other available information as described in Figure 4, block 422 above. The assemble device configuration signature module 1024 assembles the device configuration signature as described above in Figure 424 above.

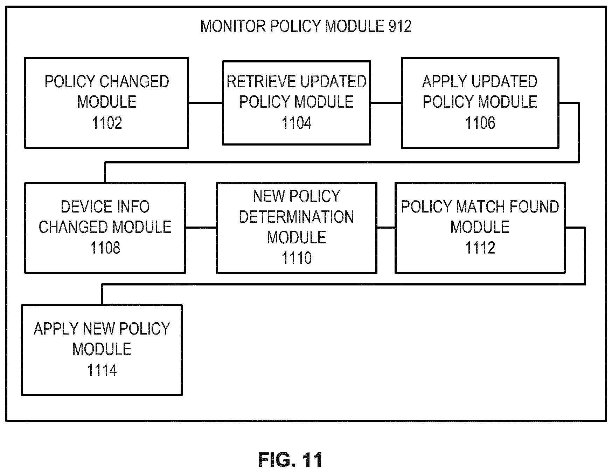

Figure 11 is a block diagram of a monitor policy module 912 that monitors the applied network policy for an update. In Figure 11, the monitor policy module 912 includes a policy changed module 1102, retrieve updated policy module 1104, apply updated policy module 1106, device information changed module 1108, new policy determination module 1110, policy match found module 1112, apply new policy module 1114. In one embodiment, the policy changed module 1102 determines if the applied network policy has changed as described in Figure 5, block 502 above. The retrieve updated policy module 1104 retrieves the updated network policy as described in Figure 5, block 504 above. The apply updated policy module 1106 applies the updated network policy as described in Figure 5, block 506 above. The device information changed module 1108 determines if the configuration information for the device has changed as described in Figure 5, block 508 above. The new policy determination module 1110 determines a network policy for the updated device configuration signature as described in Figure 5, block 510 above. The policy match found module 1112 determines if matching network policy is new as described in Figure 5, block 512 above. The apply new policy module 1114 applies the new network policy to the port as described in Figure 5, block 514 above.

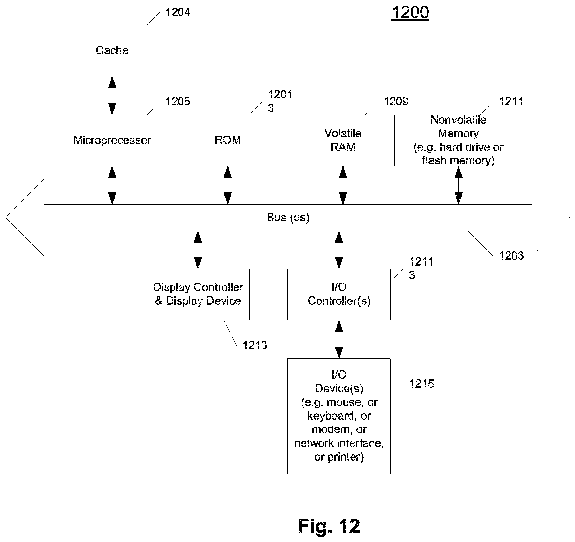

Figure 12 shows one example of a data processing system 1200, which may be used with one embodiment of the present invention. For example, the system 1200 may be implemented including a network element 104 as shown in Figure 1. Note that while Figure 12 illustrates various components of a computer system, it is not intended to represent any particular architecture or manner of interconnecting the components as such details are not germane to the present invention. It will also be appreciated that network computers and other data processing systems or other consumer electronic devices, which have fewer components or perhaps more components, may also be used with the present invention.

As shown in Figure 12, the computer system 1200, which is a form of a data processing system, includes a bus 1203 which is coupled to a microprocessor(s) 1205 and a ROM (Read Only Memory) 1207 and volatile RAM 1209 and a non-volatile memory 1211. The microprocessor 1205 may retrieve the instructions from the memories 1207, 1209, 1211 and execute the instructions to perform operations described above. The bus 1203 interconnects these various components together and also interconnects these components 1205, 1207, 1209, and 1211 to a display controller and display device 1213 and to peripheral devices such as input/output (I/O) devices which may be mice, keyboards, modems, network interfaces, printers and other devices which are well known in the art. In one embodiment, the system 1200 includes a plurality of network interfaces of the same or different type (e.g., Ethernet copper interface, Ethernet fiber interfaces, wireless, and/or other types of network interfaces). In this embodiment, the system 1200 can include a forwarding engine to forward network date received on one interface out another interface.

Typically, the input/output devices 1215 are coupled to the system through input/output controllers 1217. The volatile RAM (Random Access Memory) 1209 is typically implemented as dynamic RAM (DRAM), which requires power continually in order to refresh or maintain the data in the memory.

The mass storage 1211 is typically a magnetic hard drive or a magnetic optical drive or an optical drive or a DVD RAM or a flash memory or other types of memory systems, which maintain data (e.g. large amounts of data) even after power is removed from the system. Typically, the mass storage 1211 will also be a random access memory although this is not required. While Figure 12 shows that the mass storage 1211 is a local device coupled directly to the rest of the components in the data processing system, it will be appreciated that the present invention may utilize a non-volatile memory which is remote from the system, such as a network storage device which is coupled to the data processing system through a network interface such as a modem, an Ethernet interface or a wireless network. The bus 1203 may include one or more buses connected to each other through various bridges, controllers and/or adapters as is well known in the art.

Portions of what was described above may be implemented with logic circuitry such as a dedicated logic circuit or with a microcontroller or other form of processing core that executes program code instructions. Thus processes taught by the discussion above may be performed with program code such as machine-executable instructions that cause a machine that executes these instructions to perform certain functions. In this context, a "machine" may be a machine that converts intermediate form (or "abstract") instructions into processor specific instructions (e.g., an abstract execution environment such as a "process virtual machine" (e.g., a Java Virtual Machine), an interpreter, a Common Language Runtime, a high-level language virtual machine, etc.), and/or, electronic circuitry disposed on a semiconductor chip (e.g., "logic circuitry" implemented with transistors) designed to execute instructions such as a general-purpose processor and/or a special-purpose processor. Processes taught by the discussion above may also be performed by (in the alternative to a machine or in combination with a machine) electronic circuitry designed to perform the processes (or a portion thereof) without the execution of program code.

The present invention also relates to an apparatus for performing the operations described herein. This apparatus may be specially constructed for the required purpose, or it may comprise a general-purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), RAMs, EPROMs, EEPROMs, magnetic or optical cards, or any type of media suitable for storing electronic instructions, and each coupled to a computer system bus.

A machine readable medium includes any mechanism for storing or transmitting information in a form readable by a machine (e.g., a computer). For example, a machine readable medium includes read only memory ("ROM"); random access memory ("RAM"); magnetic disk storage media; optical storage media; flash memory devices; etc.

An article of manufacture may be used to store program code. An article of manufacture that stores program code may be embodied as, but is not limited to, one or more memories (e.g., one or more flash memories, random access memories (static, dynamic or other)), optical disks, CD-ROMs, DVD ROMs, EPROMs, EEPROMs, magnetic or optical cards or other type of machine-readable media suitable for storing electronic instructions. Program code may also be downloaded from a remote computer (e.g., a server) to a requesting computer (e.g., a client) by way of data signals embodied in a propagation medium (e.g., via a communication link (e.g., a network connection)).

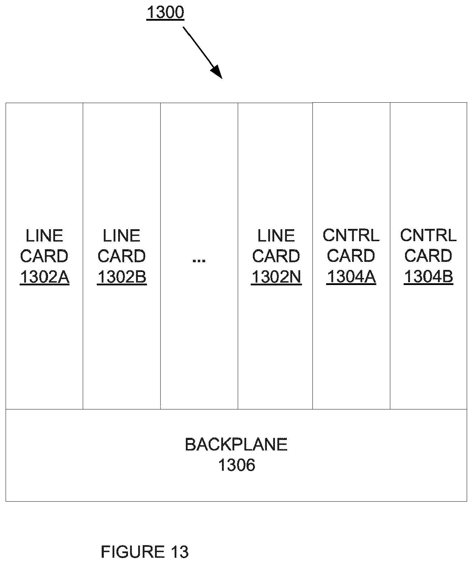

Figure 13 is a block diagram of one embodiment of an exemplary network element 1300 that determines and applies a network policy for a port based on a configuration characteristic of another device that is connected to the network element according to one embodiment of the system. In Figure 13, the backplane 1306 couples to the line cards 1302A-N and controller cards 1304A-B. While in one embodiment, the controller cards 1304A-B control the processing of the traffic by the line cards 1302A-N, in alternate embodiments, the controller cards 1304A-B, perform the same and/or different functions (determining and applying a network policy, etc.). In one embodiment, the line cards 1302A-N process and forward traffic according to the network policies received from controller cards the 1304A-B. In one embodiment, the controller cards 1304A-B determine and apply a network policy for each port of one of the line cards 1302A-N that detects a device coupled to that port as described in Figures 3-5. In this embodiment, one or both of the controller cards includes the network policy engine to determine and apply a network policy, such as the network policy engine 212 as described in Figure 2 above. In another embodiment, the line cards 1302A-N determine and apply a network policy for each port of the respective line card 1302A-N that detects a device coupled to that port as described in Figures 3-5. It should be understood that the architecture of the network element 1300 illustrated in Figure 13 is exemplary, and different combinations of cards may be used in other embodiments of the invention.

The preceding detailed descriptions are presented in terms of algorithms and symbolic representations of operations on data bits within a computer memory. These algorithmic descriptions and representations are the tools used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be kept in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "finding," "receiving," "determining," "transmitting," "sending," "forwarding," "detecting," "applying," "retrieving," "communicating," "designating," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

The processes and displays presented herein are not inherently related to any particular computer or other apparatus. Various general-purpose systems may be used with programs in accordance with the teachings herein, or it may prove convenient to construct a more specialized apparatus to perform the operations described. The required structure for a variety of these systems will be evident from the description below. In addition, the present invention is not described with reference to any particular programming language. It will be appreciated that a variety of programming languages may be used to implement the teachings of the invention as described herein.

The foregoing discussion merely describes some exemplary embodiments of the present invention. The scope of the invention is defined by the appended claims.

## Claims

1. A method to determine a port-based network policy for a port of a network element, the method comprising:
detecting a device on the port coupled to a link connecting the network element and the device and the network element is coupled to a network; and
in response to the detecting of the device on the port,
putting the port in a learning mode, wherein the port in the learning mode does not communicate network data with the device except for network data used to further configure the device,
determining a device configuration signature from the device, the device configuration signature being based on a configuration of the device,
determining the port-based network policy based on the device configuration signature,
applying the port-based network policy to the port, wherein the network element applies the port-based network policy to network data communicated through the port, and
putting the port in a forwarding state, wherein the port communicates the network data with the device using the applied network policy.

2. The method of claim 1, wherein the device configuration signature is based on one or more configurations characteristics of the device.

3. The method of claim 2, wherein each of the one or more configuration characteristics is selected from the group consisting of link media type, Internet Protocol address, Media Access Control address, Domain Name System name, Link Layer Discovery Protocol information, Dynamic Host Configuration Protocol information, and security information.

4. The method of claim 2 or 3, wherein the link media type is selected from the group consisting of Ethernet copper media, Ethernet fiber media, and wireless.

5. The method of any preceding claim, wherein the determining the port-based network policy comprises:
finding a matching signature in a policy database for the device configuration signature; and
retrieving a corresponding network policy for the matching signature; and
designating the corresponding network policy as the port-based network policy.

6. The method of any preceding claim, wherein the port-based network policy includes one or more network policy elements and each of the one or more network policy elements is selected from the group consisting of a Quality of Service policy, an Access Control List, and a Virtual Local Area Network policy.

7. The method of any preceding claim, wherein the network element is selected from the group consisting of a switch, a router, and a gateway.

8. The method of any of claims 1, to 6 wherein the network element is a virtual device.

9. The method of any preceding claim, wherein the device is a virtual machine.

10. The method of any of claims 1 to 6, wherein the link is between the network element that is physical device and the device that is a virtual network element.

11. A medium having executable instructions, which, when executed on one or more executing units, cause said one or more processing units to perform the method of any preceding claim.

12. A network element to determine a port-based network policy for a port of a network element, the network element comprising:
the port, said port being adapted to be coupled to a device via a link adapted to connect the network element and the device; and
a network engine policy engine adapted to be coupled to the port and to a network, the network engine policy engine adapted to detect a device on the port coupled to the link connecting the network element and the device and, in response to the detecting of the device on the port, to put the port in a learning mode that does not communicate network data with the device except for network data used to further configure the device, the network element policy engine being further configured to: determine a device configuration signature from the device, the device configuration signature being based on a configuration of the device, determine the port-based network policy based on the device configuration signature, apply the port-based network policy to the port, and put the port in a forwarding state, wherein the network element is configured to apply the port-based network policy to network data communicated through the port, and the port is adapted to communicate the network data with the device using the applied network policy.

13. A system that communicates network data between a device and the network element of claim 12 using a port-based network policy, the system comprising:
the device;
a link, coupled to the device;
the network element of claim 12, coupled to the link, wherein the port is adapted to communicate the network data using the port-based network policy.

14. The system of claim 13, further comprising
a controller, coupled to the network element, wherein the controller includes a policy database that stores a plurality of configuration signatures and corresponding port-based network policies.

15. The system of claim 14, wherein the network policy engine is further adapted to find a matching signature in the policy database for the device configuration signature, retrieve a corresponding network policy for the matching signature from the controller, and designate the corresponding network policy as the port-based network policy.

## Patentansprüche

1. Verfahren zum Bestimmen einer port-basierten Netzwerkpolitik für einen Port eines Netzwerkelements, wobei das Verfahren umfasst:
Detektieren einer Einrichtung am Port, gekoppelt mit einer Verbindungsstrecke, die das Netzwerkelement und die Einrichtung verbindet, und das Netzwerkelement ist mit einem Netzwerk gekoppelt,
und
in Abhängigkeit vom Detektieren der Einrichtung am Port,
den Port in einen Lernmodus versetzen, wobei der Port im Lernmodus keine Kommunikation von Netzwerkdaten mit der Einrichtung vornimmt, außer für Netzwerkdaten, die zur weiteren Konfiguration der Einrichtung verwendet werden,
Bestimmen einer Einrichtungskonfigurationssignatur aus der Einrichtung, wobei die Einrichtungskonfigurationssignatur auf einer Konfiguration der Einrichtung basiert,
Bestimmen der port-basierten Netzwerkpolitik auf Basis der Einrichtungskonfigurationssignatur,
Anwenden der port-basierten Netzwerkpolitik am Port, wobei das Netzwerkelement die port-basierte Netzwerkpolitik bei Netzwerkdaten anwendet, die durch den Port kommuniziert werden, und
den Port in einen Weiterleitungszustand versetzen, wobei der Port eine Kommunikation der Netzwerkdaten mit der Einrichtung unter Einsatz der angewendeten Netzwerkpolitik vornimmt.

2. Verfahren nach Anspruch 1, bei dem die Einrichtungskonfigurationssignatur auf einem oder mehreren Konfigurationsmerkmalen der Einrichtung basiert.

3. Verfahren nach Anspruch 2, bei dem das eine oder die mehreren Konfigurationsmerkmale jeweils ausgewählt sind aus der Gruppe bestehend aus Verbindungsmedientyp, Internetprotokolladresse, Medienzugangskontrolladresse, Domainname Systemname, Link-Layer-Discovery-Protocol(LLDP)-Informationen, Dynamic-Host-Configuration-Protocol(DHCP)-Informationen und Sicherheitsinformationen.

4. Verfahren nach Anspruch 2 oder 3, bei dem der Verbindungsmedientyp ausgewählt ist aus der Gruppe bestehend aus Ethernet-Kupfermedien, Ethernet-Fasermedien und drahtlos.

5. Verfahren nach einem der vorhergehenden Ansprüche, bei dem das Bestimmen der port-basierten Netzwerkpolitik umfasst:
Finden einer passenden Signatur in einer Politikdatenbank für die Einrichtungskonfigurationssignatur und
Abrufen einer entsprechenden Netzwerkpolitik für die passende Signatur und
Bezeichnen der entsprechenden Netzwerkpolitik als die port-basierte Netzwerkpolitik.

6. Verfahren nach einem der vorhergehenden Ansprüche, bei dem die port-basierte Netzwerkpolitik ein oder mehrere Netzwerkpolitikelemente aufweist und das eine oder die mehreren Netzwerkpolitikelemente jeweils ausgewählt sind aus der Gruppe bestehend aus einer Quality-of-Service(QoS)-Politik, einer Zugangskontroll-Liste und einer Virtual-Local-Area-Network(VLAN)-Politik.

7. Verfahren nach einem der vorhergehenden Ansprüche, bei dem das Netzwerkelement ausgewählt ist aus der Gruppe bestehend aus einem Switch, einem Router und einem Gateway.

8. Verfahren nach einem der Ansprüche 1 bis 6, wobei es sich bei dem Netzwerkelement um eine virtuelle Einrichtung handelt.

9. Verfahren nach einem der vorhergehenden Ansprüche, wobei es sich bei der Einrichtung um eine virtuelle Maschine handelt.

10. Verfahren nach einem der Ansprüche 1 bis 6, bei dem die Verbindungsstrecke zwischen dem Netzwerkelement, das eine physische Einrichtung darstellt, und der Einrichtung, die ein virtuelles Netzwerkelement darstellt, ausgebildet ist.

11. Medium mit ausführbaren Instruktionen, die, bei Ausführung auf einer oder mehreren Ausführungseinheiten, diese eine oder die mehreren Verarbeitungseinheiten veranlassen, das Verfahren nach einem der vorhergehenden Ansprüche durchzuführen.

12. Netzwerkelement zum Bestimmen einer port-basierten Netzwerkpolitik für einen Port eines Netzwerkelements, wobei das Netzwerkelement umfasst:
den Port, wobei der genannte Port dazu ausgebildet ist, dass er mit einer Einrichtung über eine Verbindungsstrecke koppelbar ist, die dazu ausgebildet ist, das Netzwerkelement und die Einrichtung zu verbinden, und
eine Netzwerkmaschinenpolitik-Maschine, die dazu ausgebildet ist, dass sie mit dem Port und mit einem Netzwerk koppelbar ist,
wobei die Netzwerkmaschinenpolitik-Maschine dazu ausgebildet ist, dass sie eine Einrichtung am Port, gekoppelt mit der Verbindungsstrecke, die das Netzwerkelement und die Einrichtung verbindet, detektiert und in Abhängigkeit vom Detektieren der Einrichtung am Port, den Port in einen Lernmodus versetzt, der keine Kommunikation von Netzwerkdaten mit der Einrichtung vornimmt, außer für Netzwerkdaten, die zur weiteren Konfiguration der Einrichtung verwendet werden, wobei die Netzwerkelementpolitik-Maschine weiter konfiguriert ist:
zum Bestimmen einer Einrichtungskonfigurationssignatur aus der Einrichtung, wobei die Einrichtungskonfigurationssignatur auf einer Konfiguration der Einrichtung basiert,
zum Bestimmen der port-basierten Netzwerkpolitik auf Basis der Einrichtungskonfigurationssignatur,
zum Anwenden der port-basierten Netzwerkpolitik am Port, und
den Port in einen Weiterleitungszustand zu versetzen,
wobei das Netzwerkelement konfiguriert ist zum Anwenden der port-basierten Netzwerkpolitik bei Netzwerkdaten, die durch den Port kommuniziert werden, und der Port dazu ausgebildet ist, dass er eine Kommunikation der Netzwerkdaten mit der Einrichtung unter Einsatz der angewendeten Netzwerkpolitik vornimmt.

13. System zur Kommunikation von Netzwerkdaten zwischen einer Einrichtung und dem Netzwerkelement nach Anspruch 12 unter Einsatz einer port-basierten Netzwerkpolitik, wobei das System umfasst:
die Einrichtung,
eine Verbindungsstrecke, die mit der Einrichtung gekoppelt ist,
das Netzwerkelement nach Anspruch 12, gekoppelt mit der Verbindungsstrecke, wobei der Port dazu ausgebildet ist, dass er eine Kommunikation von Netzwerkdaten unter Einsatz der port-basierten Netzwerkpolitik vornimmt.

14. System nach Anspruch 13, weiter umfassend
eine Steuerungseinheit, gekoppelt mit dem Netzwerkelement, wobei die Steuerungseinheit eine Politikdatenbank aufweist, die eine Mehrzahl von Konfigurationssignaturen und entsprechende port-basierte Netzwerkpolitik speichert.

15. System nach Anspruch 14, bei dem die Netzwerkpolitik-Maschine weiter dazu ausgebildet ist, dass sie eine passende Signatur in der Politikdatenbank für die Einrichtungskonfigurationssignatur findet, eine entsprechende Netzwerkpolitik für die passende Signatur aus der Steuerungseinheit abruft und die entsprechende Netzwerkpolitik als die port-basierte Netzwerkpolitik bezeichnet.

## Revendications

1. Procédé pour déterminer une politique de réseau basée sur le port pour un port d'un élément de réseau, le procédé comprenant :
détecter un dispositif sur le port couplé à une liaison connectant l'élément de réseau et le dispositif et l'élément de réseau est couplé à un réseau ; et
en réponse à la détection du dispositif sur le port,
mettre le port dans un mode d'apprentissage, dans lequel le port dans le mode d'apprentissage ne communique pas de données de réseau avec le dispositif à l'exception de données de réseau utilisées pour configurer en outre le dispositif,
déterminer une signature de configuration de dispositif à partir du dispositif, la signature de configuration de dispositif étant basée sur une configuration du dispositif,
déterminer la politique de réseau basée sur le port sur la base de la signature de configuration de dispositif,
appliquer la politique de réseau basée sur le port au port, dans lequel l'élément de réseau applique la politique de réseau basée sur le port à des données de réseau communiquées à travers le port, et
mettre le port dans un mode de transmission, dans lequel le port communique les données de réseau avec le dispositif en utilisant la politique de réseau appliquée.

2. Procédé selon la revendication 1, dans lequel la signature de configuration de dispositif est basée sur une ou plusieurs caractéristiques de configuration du dispositif.

3. Procédé selon la revendication 2, dans lequel chacune des une ou plusieurs caractéristiques de configuration est sélectionnée à partir du groupe comprenant un type de support de liaison, une adresse IP, une adresse MAC, un nom de DNS, des informations de LLDP, des informations de DHCP et des informations de sécurité.

4. Procédé selon la revendication 2 ou 3, dans lequel le type de support de liaison est sélectionné à partir du groupe comprenant un support cuivre Ethernet, un support de fibre Ethernet et sans fil.

5. Procédé selon une quelconque revendication précédente, dans lequel la détermination de la politique de réseau basée sur le port comprend :
trouver une signature équivalente dans une base de données de politiques pour la signature de configuration de dispositif ; et
récupérer une politique de réseau correspondante pour la signature équivalente ; et
désigner la politique de réseau correspondante en tant que politique de réseau basée sur le port.

6. Procédé selon une quelconque revendication précédente, dans lequel la politique de réseau basée sur le port inclut un ou plusieurs éléments de politique de réseau et chacun des un ou plusieurs éléments de politique de réseau est sélectionné à partir du groupe comprenant une politique de qualité de service, une liste de commande d'accès et une politique de réseau local virtuel.

7. Procédé selon une quelconque revendication précédente, dans lequel l'élément de réseau est sélectionné à partir du groupe comprenant un commutateur, un routeur et une passerelle.

8. Procédé selon l'une quelconque des revendications 1 à 6, dans lequel l'élément de réseau est un dispositif virtuel.

9. Procédé selon une quelconque revendication précédente, dans lequel le dispositif est une machine virtuelle.

10. Procédé selon l'une quelconque des revendications 1 à 6, dans lequel la liaison est entre l'élément de réseau qui est un dispositif physique et le dispositif qui est un élément de réseau virtuel.

11. Support ayant des instructions exécutables qui, quand elles sont exécutées sur une ou plusieurs unités d'exécution, amènent lesdites une ou plusieurs unités de traitement à réaliser le procédé selon une quelconque revendication précédente.

12. Elément de réseau pour déterminer une politique de réseau basée sur le port pour un port d'un élément de réseau, l'élément de réseau comprenant :
le port, ledit port étant adapté pour être couplé à un dispositif via une liaison adaptée pour connecter l'élément de réseau et le dispositif ; et
un moteur de politique de moteur de réseau étant adapté pour être couplé au port et à un réseau, le moteur de politique de moteur de réseau étant adapté pour détecter un dispositif sur le port couplé à la liaison connectant l'élément de réseau et le dispositif et, en réponse à la détection du dispositif sur le port, pour mettre le port dans un mode d'apprentissage qui ne communique pas de données de réseau avec le dispositif à l'exception de données de réseau utilisées pour configurer en outre le dispositif, le moteur de politique d'élément de réseau étant configuré en outre pour :
déterminer une signature de configuration de dispositif à partir du dispositif, la signature de configuration de dispositif étant basée sur une configuration du dispositif, déterminer la politique de réseau basée sur le port sur la base de la signature de configuration de dispositif, appliquer la politique de réseau basée sur le port au port, et mettre le port dans un mode de transmission, dans lequel l'élément de réseau est configuré pour appliquer la politique de réseau basée sur le port à des données de réseau communiquées à travers le port, et le port est adapté pour communiquer les données de réseau avec le dispositif en utilisant la politique de réseau appliquée.

13. Système qui communique des données de réseau entre un dispositif et l'élément de réseau selon la revendication 12 en utilisant une politique de réseau basée sur le port, le système comprenant :
le dispositif ;
une liaison couplée au dispositif ;
l'élément de réseau selon la revendication 12 couplé à la liaison, dans lequel le port est adapté pour communiquer les données de réseau en utilisant la politique de réseau basée sur le port.

14. Système selon la revendication 13, comprenant en outre
un contrôleur couplé à l'élément de réseau, dans lequel le contrôleur inclut une base de données de politiques qui stocke une pluralité de signatures de configuration et de politiques de réseau basées sur le port correspondantes.

15. Système selon la revendication 14, dans lequel le moteur de politique de réseau est adapté en outre pour trouver une signature équivalente dans une base de données de politiques pour la signature de configuration de dispositif, récupérer une politique de réseau correspondante pour la signature équivalente à partir du contrôleur, et désigner la politique de réseau correspondante en tant que politique de réseau basée sur le port.
